# EUROPEAN PATENT SPECIFICATION

(11) **EP 0 569 054 B1**
(45) Date of publication and mention of the grant of the patent: **10.04.1996**
(21) Application number: 93111526.5
(22) Date of filing: 19.06.1989
(51) Int. Cl.: G11B 11/10

(54) **Magneto-optical recording apparatus**
Magneto-optisches Aufzeichnungsgerät
Appareil d'enregistrement magnéto-optique

(30) Priority: 24.06.1988 JP 157729/88; 18.10.1988 JP 263503/88
(43) Date of publication of application: 10.11.1993
(62) Divisional of application: 89907287.0
(73) Proprietor: SONY CORPORATION, Tokyo (JP)
(72) Inventor: Watanabe, Tetsu, c/o Intellectual Property Div., Shinagawa-ku, Tokyo 141 (JP); Kawashima, Tetsuji, c/o Intellectual Property Div., Shinagawa-ku, Tokyo 141 (JP); Fugita, Goro, c/o Intellectual Property Div., Shinagawa-ku, Tokyo 141 (JP)
(74) Representative: Cotter, Ivan John

(56) References cited:
- WO-A-88/01093
- PATENT ABSTRACTS OF JAPAN vol. 11, no. 389 (P-648) 19 December 1987 & JP-A-62 154 250
- PATENT ABSTRACTS OF JAPAN vol. 11, no. 045 (P-546) 10 February 1987 & JP-A-61 214 266
- PATENT ABSTRACTS OF JAPAN vol. 12, no. 175 (P-707) 25 May 1988 & JP-A-62 285 258
- PATENT ABSTRACTS OF JAPAN vol. 13, no. 353 (P-913) 8 August 1989 & JP-A-11 12 551

## Description

This invention relates to magneto-optical recording apparatus and may be advantageously applied to a magneto-optical recording apparatus in which, for example, data may be recorded by overwriting on a magneto-optical disk.

Heretofore, in a magneto-optical recording apparatus, desired record data are magnetically recorded by taking advantage of the phenomenon that magnetic properties of the magneto-optical disk are changed significantly on both sides of the Curie temperature Tc as the boundary temperature.

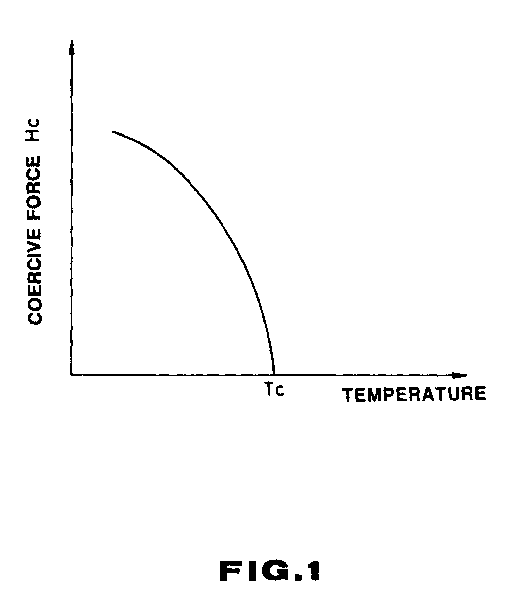

Thus, as shown in Fig. 1, the coercive force Hc of the vertical magnetization film of a magneto-optical disk is lowered abruptly at the Curie temperature.

Hence, the vertical magnetization film is warmed once to higher than the Curie temperature Tc and then lowered to a temperature lower than the Curie temperature Tc by application of an external magnetic field so as to be oriented in the direction of the external magnetic field.

Based on such principle of magnetization, the magneto-optical recording apparatus is so designed and constructed that a light spot is swept on the magneto-optical disk by continuously irradiating the magneto-optical disk with the light beam to warm up a predetermined region of the magneto-optical disk to higher than the Curie temperature Tc, at the same time that a modulating magnetic field having its polarity reversed at the timing of a predetermined reference clock signal as a function of record data is applied with the use of a magnetic head.

In this manner, the region irradiated by the light spot is warmed once to a temperature higher than the Curie temperature Tc and cooled spontaneously so as to be oriented along the direction of the modulating magnetic field applied to the region at the timing of crossing of the Curie temperature Tc.

Thus, even when the pattern of magnetization has been formed previously, micro-regions oriented in accordance with the modulating magnetic field (referred to hereinafter as pits) are formed one after another on the sweeping path of the light spot at the period of the clock signals to cause desired record data to be recorded in an overwriting manner.

Meanwhile, when the region irradiated by a light beam is cooled spontaneously after the irradiation, the time which elapses since sweeping by the light spot until spontaneous cooling to lower than the Curie temperature Tc is changed as a function of the temperature characteristics of the magneto-optical disk itself so that a problem is raised that the pit formation position is changed with respect to the reference clock signal as a function of temperature characteristics of the magneto-optical disk itself.

Hence, when forming reference clock signals from pre-pits previously formed on the magneto-optical disk, the pit forming position with respect to the pre-pits is changed to render it difficult to reproduce record data on the basis of the pre-pits. Thus, phase shift or deviation is brought about in the signal reproduced from the pre-pits.

In addition, for reliably detecting changes in orientation between adjoining pits and reliably reproducing the record data, it is necessary to form magnetization patterns the orientation of which is reversed abruptly between the adjoining pits.

Thus, when the light beam is irradiated continuously, it becomes necessary to select the magnetic circuit for forming the modulating magnetic field as a driving circuit driving the magnetic circuit having excellent frequency characteristics, so as to enable acute polarity inversion of the modulating magnetic field, which complicates the structure on the whole correspondingly.

European Patent Application Publication No. EP-A-0 275 323, which was not published until 27 July 1988 but which corresponds to PCT Patent Application Publication No. W0 88/01093 published on 11 February 1988, discloses a magneto-optical recording apparatus in which light spots are formed one after another on a magneto-optical disk at the timing of a predetermined reference clock signal, and a predetermined modulating magnetic field is applied which is reversed in polarity as a function of record data in synchronism with the reference clock signals to magnetically record said record data on the magneto-optical disk.

Japanese Patent Application Publication No. JP-A-62 154 250, an English-language abstract of which is published in PATENT ABSTRACTS OF JAPAN, Vol 11, No. 389 (P-648), 19 December 1987, discloses a photomagnetic recording apparatus in which, to enable recording (or reproduction or erasure) in a wide temperature range, the temperature of a disk recording medium is detected with a temperature sensor stuck to an optical pickup and the recording power (or reproduction or erasure power) is changed.

Japanese Patent Application Publication No. JP-A-61 214 266, an English-language abstract of which is published in PATENT ABSTRACTS OF JAPAN, Vol 11, No. 045 (P-546), 10 February 1987, discloses a photomagnetic recording apparatus in which, to compensate for variation in recording sensitivity due to variation in ambient temperature of a disk recording medium, the ambient temperature is detected and the output of a laser is controlled in response thereto such that a recording laser light intensity corresponding to the ambient temperature is obtained.

Japanese Patent Application Publication No. JP-A-62 285 258, an English-language abstract of which is published in PATENT ABSTRACTS OF JAPAN, Vol 12, No. 175 (P-707), 25 May 1988, discloses a magneto-optical disk recording apparatus in which standard data for optimum laser light control in the case of a standard disk is stored. When a disk is to be recorded by the apparatus, an optimum drive current is obtained by repeating recording/reproduction while the drive current is changed so as to obtain an output of optimum laser light at several different radial positions on the disk, and the ambient temperature and disk radial position are then stored. Control data is generated from the measurement data and the standard data and then stored. The control data is used to estimate a required drive current at positions other than the measuring positions, and laser light control is attained in dependence upon the radial position of the disk and the ambient temperature.

According to the invention there is provided a magneto-optical recording apparatus in which light spots are formed one after another on a magneto-optical disk at the timing of a predetermined reference clock signal, and a predetermined modulating magnetic field is applied which is reversed in polarity as a function of record data in synchronism with the reference clock signal to magnetically record said record data on the magneto-optical disk,
characterised in that a control circuit is operative to control both the irradiation intensity and the irradiation time of a light beam forming said light spots as a function of the temperature of the magneto-optical disk obtained via an output of a temperature sensor means and of the radial sweeping position of said light spot on said magneto-optical disk obtained via an output of a light spot position detection means.

By controlling both the irradiation intensity and irradiation time (and preferably also the irradiation timing) of the light beam as a function of the disk temperature and the radial sweeping position of the light spot, pits can be formed at the correct position despite changes in the ambient temperature and the radial sweeping position of the light spot.

The invention will now be further described, by way of example, with reference to the accompanying drawings, in which:
Fig. 1 is a characteristic curve showing general magnetization of a magneto-optical disk;
Fig. 2 is a block diagram showing the structure of a first magneto-optical recording apparatus;
Fig. 3 is a characteristic curve showing typical characteristics of a magneto-optical disk employed in the first recording apparatus;
Fig. 4 is a diagrammatic view showing a region at higher than the Curie temperature on a path swept by a light spot in the first recording apparatus;
Fig. 5 is a signal waveform diagram for illustrating the operation of the first recording apparatus;
Fig. 6 is a signal waveform diagram showing the relation of a modulating magnetic field with a reference clock signal in the first recording apparatus;
Fig. 7 is a block diagram showing the structure of a second magneto-optical recording apparatus;
Fig. 8 is a signal waveform diagram for illustrating the operation of the second recording apparatus;
Fig. 9 is a diagrammatic view for illustrating changes in pit forming position in the second recording apparatus;
Fig. 10 is a timing chart showing the state of light beam irradiation in the second recording apparatus; and
Fig. 11 is a characteristic curve showing the state of phase shift or deviation in the second recording apparatus.
An embodiment of the present invention will be explained in detail by referring to the drawings.

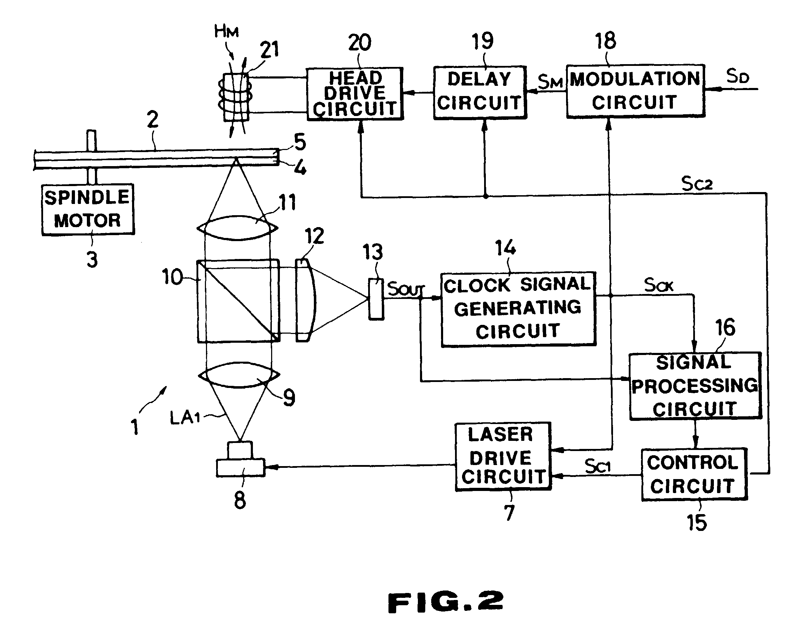

In the block diagram of Fig. 2 showing an arrangement of a first magneto-optical recording apparatus, 1 denotes the magneto-optical recording apparatus in its entirety, wherein a magneto-optical disk 2 comprised of a transparent protective base plate 4 of e.g. polycarbonate or glass on which a vertical magnetization film 5 is applied is driven by a spindle motor 3 so as to be rotated at a predetermined rotational speed.

On the magneto-optical disk 2, servo patterns of a so-called sample format are formed in servo regions provided at a predetermined angular interval, and reference clock signals for writing and read-out of record data may be obtained on the basis of reproduced signals obtained from the servo patterns of the servo format.

The magneto-optical disk 2 has a control track on its innermost periphery and information such as magnetic and temperature characteristics of the magneto-optical disk 2 is previously recorded in the control track.

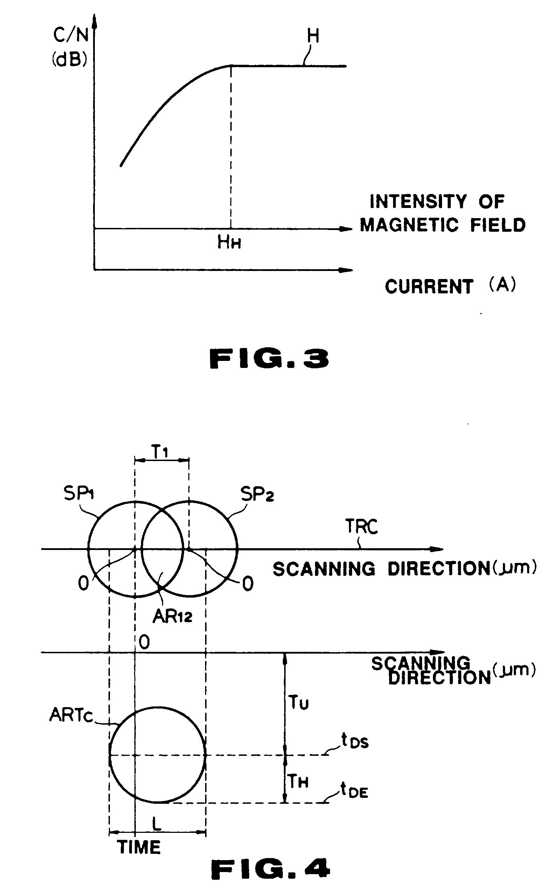

That is, the magneto-optical disk 2 has characteristics, such as are shown in Fig. 3, in which, when the current supplied to the magnetic head is increased, so that the external magnetic field becomes stronger, the C/N ratio of the reproduced signal is improved until it reaches saturation, the intensity of the magnetic field at the saturation point H_{H} being recorded as the data for magnetic characteristics. The intensity of the magnetic field H_{H} at the saturation point is referred to hereinafter as the necessary magnetic field.

On the magneto-optical disk 2, there are also recorded, as the data for temperature characteristics of the magneto-optical disk 2, time data of the time during which the temperature of an area irradiated with a light spot of a predetermined light volume rises to a Curie temperature Tc when the light spot is irradiated for a predetermined time in synchronism with reference clock signals on a magneto-optical disk 2 which is maintained at a predetermined reference temperature, peak temperature data and time data of the time during which the temperature falls from the peak temperature to the Curie temperature.

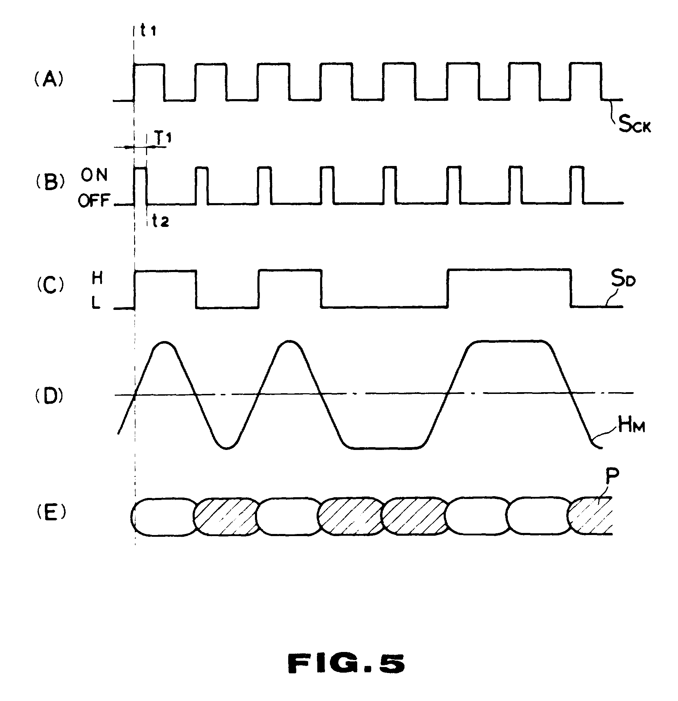

A semiconductor laser element 8 from which a light beam LA₁ is emitted so as to be irradiated on the magneto-optical disk 2 is driven by a laser driving circuit 7. The circuit 7 operates by a control signal S_{C1} supplied from a control circuit 15 to switch the volume of the light of the light beam LA₁ and to switch the driving state from continuous driving to pulse driving. Under the pulse driving state, the laser driving circuit 7 operates to drive the semiconductor laser element 8 intermittently, as shown at B in Fig. 5, in synchronism with the reference clock signal S_{CK}, shown at A in Fig. 5, which is supplied from a clock signal generator 14.

With the above magneto-optical recording apparatus 1, the light beam LA₁ exiting from the semiconductor laser element 8 is converged on the magneto-optical disk 2, by way of a collimator lens 9, light polarizing beam splitter 10 and an objective lens 11, and the light reflected from the magneto-optical disk 2 is transmitted to a photo detector 13 by way of the objective lens 11, beam splitter 10 and a condenser lens 12.

The clock signal generator 14 receives reproduced signals S_{OUT}, produced at the photo detector 13, and, on the basis of the reproduced signal from the servo regions, outputs a reference clock signal S_{CK} for writing or reading out record data.

The control circuit 15 also receives data concerning magnetic and temperature characteristics of the magneto-optical disk 2, obtained upon demodulating the reproduced signal S_{OUT} at a signal processing circuit 16 and, on the basis of these data on the magnetic and temperature characteristics, performs a switching control of the operations of the laser driving circuit 7, a delay circuit 19 and a head driving circuit 20.

The control circuit 15 outputs the control signal SC₁ to the laser driving circuit 7 in the recording mode to drive the semiconductor laser element 8 continuously by the laser drive circuit 7 during the time corresponding to the servo region of the magneto-optical disk 2 to irradiate the servo regions with the light beam LA₁ continuously to derive the tracking error signal as well as the reference clock signal S_{CK} from the servo region to perform a control of actuating a tracking servo system, not shown, to effect tracking control of the light spot. The control circuit 15 switches the light beam LA₁ emitted by the semiconductor laser element 8 by the laser driving circuit 7 to a predetermined light volume, while pulse-driving the semiconductor laser element 8, during the time corresponding to other than the servo regions, to emit the light beam LA₁ from the semiconductor laser element 8 during a predetermined period T₁ starting with rising of the reference clock signal, as shown at B in Fig. 5, to perform a control of intermittently irradiating the regions other than the servo regions with the light beam LA₁.

In this case, as shown in Fig. 4, the relation between the region ARTc in which the temperature is increased to higher than the Curie temperature Tc and the time involved in such temperature increase and temperature decrease may be represented, on the center TRC of the travel path of the light spot, with the direction of scanning by the light spot taken on an X-axis.

Thus, when the light spots SP₁ and SP₂ formed at the time point t₁ of initiation of irradiation of the light beam LA₁ and the time point t₂ of termination of irradiation are partially overlapped with each other, the area ARTc within the range of the inner side length L is increased in temperature than the Curie temperature t_{C} than the area irradiated by the light beam LA₁.

If the time point t₁ of the start of irradiation of the light beam LA₁ is taken as the reference, a region AR₁₂ in which the light spot SP₁ is overlapped with the light spot SP₂ is irradiated with a light beam LA₁ continuously during the predetermined time T₁, so that the temperature therein is raised to higher than the Curie temperature Tc in the shortest time and lowered to lower than the Curie temperature Tc in the longest time.

Conversely, in a region in which the light spots SP₁ and SP₂ are not overlapped with each other, the further the region is spaced away from the area AR₁₂, the longer is the time required for temperature increase and the shorter is the time required for temperature decrease.

It may be seen from above that, for positively orienting the region ART_{C} of the length L by the necessary magnetic field H_{H}, it suffices to impress the necessary magnetic field H_{H} at a time point t_{DS} at which the temperature decrease to lower than the Curie temperature Tc starts at a portion of the region ARTc of the length L and to maintain the intensity of the modulation magnetic field at lower than the necessary magnetic field H_{H} during the time period T_{H} from the above time point t_{DS} until the time point t_{DE} at which the temperature in the totality of the region ARTc of the length L falls to lower than the Curie temperature Tc.

In the following, the time period since the time point t₁ of the start of irradiation of the light beam LA₁ until the time point t_{DS} of the start of temperature decrease to lower than the Curie temperature Tc in a portion of the region of the length L, is termed the rise time T_{U}, whereas the period T_{H} from the above time point t_{DS} until the time t_{DE} at which the temperature in the totality of the region of length L falls to lower than the Curie temperature Tc is termed the holding time.

Inasmuch as the rise time T_{U} and the holding time T_{H} differ from one magneto-optical disk to another, depending on the magnetic and temperature characteristics thereof, the region irradiated by the light beam LA₁, can be positively oriented by the necessary magnetic field H_{H} by variably controlling the time period during which the modulating magnetic field rises to the necessary magnetic field H_{H} by the reference clock signal S_{CK} and the time period during which the modulating magnetic field falls to the necessary magnetic field H_{H}, as a function of the magnetic and temperature characteristics of the magneto-optical disk LA₁.

As a result, the light beam LA₁ is irradiated at the timing of the reference clock signal S_{CK}, so that a pit can be formed which is oriented in the correct position by the necessary magnetic field H_{H} with relation to the timing of the reference clock signal S_{CK}. A series of consecutive pits can be formed at the period of the reference clock signals S_{CK} with relation to the pits of the sample format recorded on the reference clock signal S_{CK}.

Besides the problem of the magnetic and temperature characteristics of the magneto-optical disk, there is raised the problem that, when the light beam is irradiated continuously, the temperature in the near-by regions of the pits is changed markedly by the light beam irradiation, in such a manner as to affect the position of the pit which will be subsequently formed.

As described above, temperature changes in the near-by region of the pits when the light beam LA₁ is irradiated from the semiconductor laser element 8 intermittently can be reduced to a lower value than when the light beam is irradiated continuously, so that deflection of the pit forming position caused by the temperature changes can be prevented from occurring, while the semiconductor laser element 8 may be improved in reliability simultaneously.

Thus, with the first recording apparatus, the rise time T_{U} and the holding time T_{H} of the magnetic disk 2 may be derived on the basis of data of the magnetic and temperature characteristics of the magnetic-optical disk 2 recorded on the control track and the timing of the modulating magnetic field may thereby be controlled variably with respect to the reference clock signal S_{CK}.

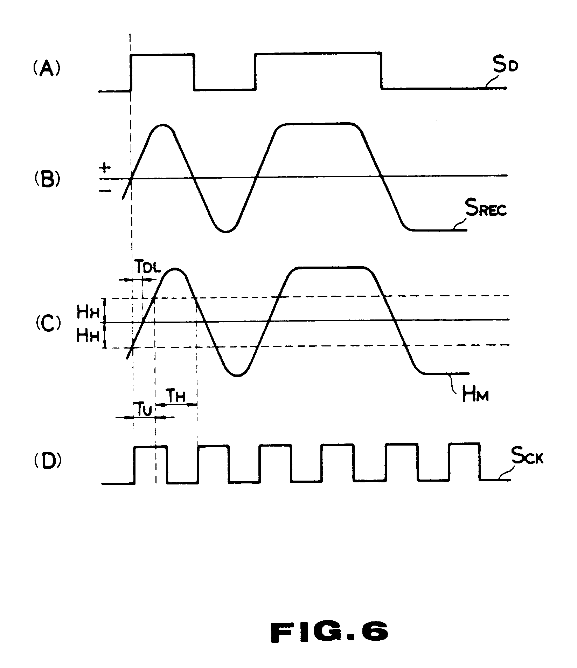

Thus, in the first recording apparatus, the modulating circuit 18 receives record data signals S_{D} as shown for example at A in Fig. 6 to form record signals S_{REC} inverted in polarity at a predetermined gradient responsive to the signal level of the record data signal S_{D} to output the record signal S_{REC} to the head driving circuit 20 by way of the delay circuit 19.

The control circuit 15 outputs a control signal S_{C2} to the delay circuit 19 and to the head driving circuit 20 to variably control the delay time T_{DL} of the delay circuit 19 and the amplification factor of the head driving circuit 20.

Thus, by variably controlling the amplification factor of the head driving circuit 20, the modulating magnetic field H_{M} formed by the magnetic head 21 is set so as to be higher than the necessary magnetic field H_{H} during the time longer than the holding time T_{H}.

By variably controlling the delay time T_{DL} of the delay circuit 19, the modulating magnetic field H_{M} is caused to rise to above the necessary magnetic field H_{H} with a delay by the rise time T_{U} from the reference clock signal S_{CK} shown at D in Fig. 6.

In this manner, desired pits may be formed one after another along the scanning path of the light spot, so that pits P shown at E in Fig. 5 may be formed one after another on the scanning path of the light spot by the modulating magnetic field H_{M}, shown at D in Fig. 5, associated with the record data signals S_{D} shown at C in Fig. 5.

In the first recording apparatus, it suffices to raise the modulating magnetic field H_{M} to higher than the necessary magnetic field H_{H} with a delay equal to the rise time T_{U} from the reference clock signal S_{CK} and to maintain the modulating magnetic field H_{M} at higher than the necessary magnetic field H_{H} only during the time longer than the holding time T_{H}. In this manner, a magneto-optical recording apparatus may be obtained which is simpler in construction as compared with the case in which the polarity of the modulating magnetic field is changed abruptly. Hence, by selecting the magnetic head driving circuit so as to have correspondingly higher frequency characteristics, a magneto-optical recording apparatus may be obtained which is markedly higher in the recording density than with the conventional apparatus.

In the above arrangement, the light beam LA₁, is irradiated on the magneto-optical disk 2 at the timing of the reference clock signal S_{CK} obtained at the servo regions of the magneto-optical disk 2, so that the light spot is formed intermittently on the magneto-optical disk 2.

On the other hand, the delay time T_{DL} of the delay circuit 19 and the amplification factor of the head driving circuit 20 are controlled variably on the basis of the magnetic and temperature characteristics of the disk 2, recorded on its control track, so that the modulating magnetic field H_{M} rises to a level higher than the necessary magnetic field H_{H} with a delay equal to the rise time T_{U} from the reference clock signal S_{CK} and then falls to lower than the necessary magnetic field H_{H} after lapse of the holding time T_{H}.

Thus the region irradiated by the optical beam LA₁ is oriented by the modulating magnetic field H_{M} higher than the necessary magnetic field H_{H} so that the pit P may be formed, which is oriented at the correct position by the modulating magnetic field H_{M} higher than the necessary magnetic field H_{H}, at the timing of the reference clock signal S_{CK}.

In the above arrangement, the delay time T_{DL} of the delay circuit 19 and the amplification factor of the head driving circuit 20 may be variably controlled from disk to disk on the basis of the magnetic and temperature characteristics of the magneto-optical disk to derive the modulating magnetic field H_{H} which rises to higher than the necessary magnetic field H_{H} with a delay equal to the rise time T_{U} and falls to lower than the necessary magnetic field H_{H} after lapse of the holding time T_{H} so that the regions irradiated by the light beam may be oriented reliably to an intensity higher than the necessary magnetic field H_{H}.

Hence, with the first recording apparatus, despite the simple arrangement on the whole, the pit P can be formed at the correct position at the timing of the reference clock signal S_{CK}.

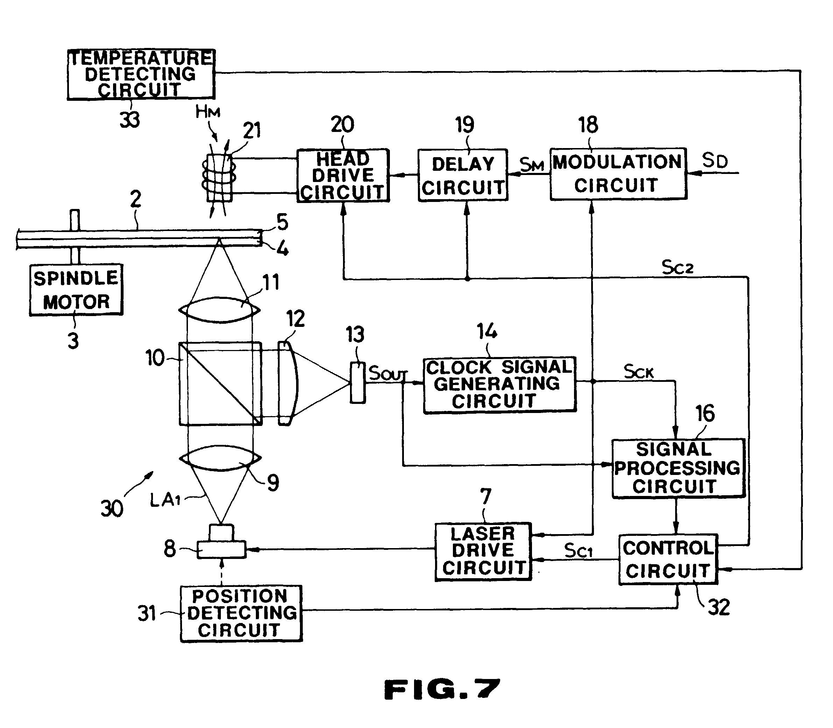

Referring to the block diagram of Fig. 7 which shows the arrangement of a second magneto-optical recording apparatus, the numeral 30 generally denotes the magneto-optical recording apparatus, which is operative to delay the modulating magnetic field depending on a particular magneto-optical disk and to control the light beam depending on the disk temperature and the sweeping position of the light position.

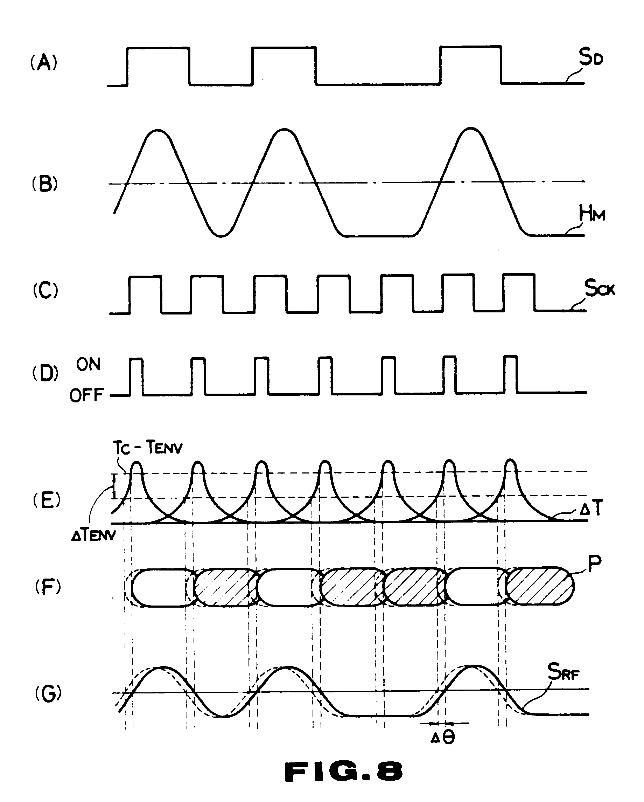

Thus, when the light beam LA₁ is irradiated intermittently, as shown at D in Fig. 8, in synchronism with the reference clock signal S_{CK} shown at C in Fig. 8, under application of the modulating magnetic field H_{M} as shown at B in Fig. 8, which is reversed in polarity as a function of the record data signal S_{D} shown at A in Fig. 8, the temperature at an area of the disk irradiated with the light beam LA₁ rises from the ambient temperature of the disk and then falls to the ambient temperature, so that the regions irradiated with the light beam LA₁ undergo a temperature change Δ T as shown at E in Fig. 8.

Thus there is raised a problem that, when the temperature change ΔT exceeds Tc - T_{ENV}, wherein T_{ENV} denotes the ambient temperature of the disk, the pit P oriented by the modulating magnetic field H_{M} is formed, as shown at F in Fig. 8 and, if the ambient temperature T_{ENV} is changed, the position of pit formation is changed with changes in the ambient temperature T_{ENV}.

For example, when the ambient temperature T_{ENV} is raised by Δ T_{ENV} and the disk temperature is raised correspondingly, the disk temperature may rise to the Curie temperature with a lesser temperature increase Δ T, so that, as shown by a broken line at F in Fig. 8, the position of pit formation is shifted in an opposite direction to the sweeping direction of the light spot.

As a result, the pit cannot be formed at the correct position, such that, when the ambient temperature T_{ENV} is raised, the reproduced signal S_{RF} is advanced in phase by Δθ as shown at G in Fig. 8.

On the other hand, when the magneto-optical disk is rotated at a constant angular velocity, the linear velocity on the inner periphery of the disk is lower than that on the outer periphery of the disk so that the irradiation intensity of the light beam per unit area is increased and the rise time T_{U} correspondingly reduced.

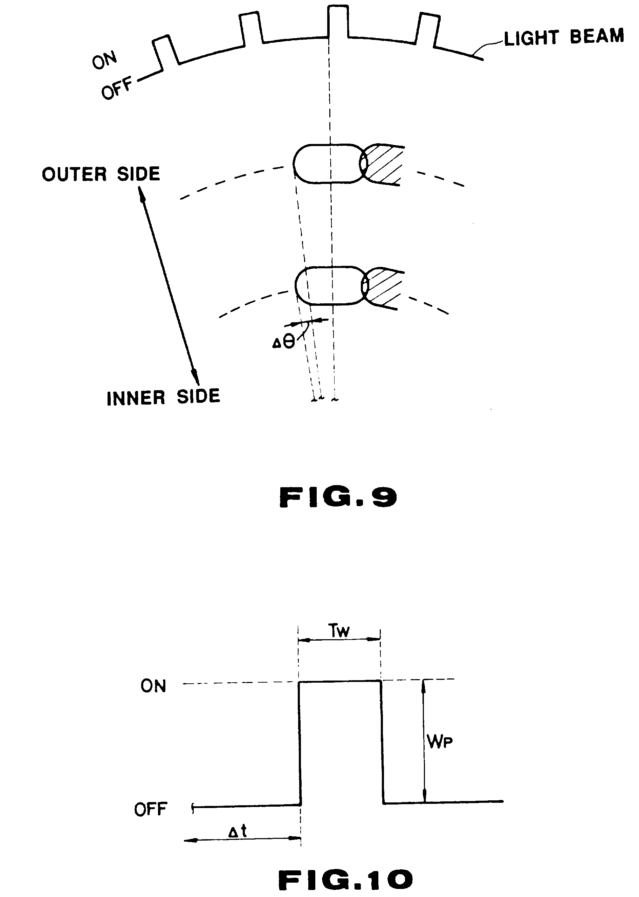

Hence, as shown in Fig. 9, the position of formation of the pit P is changed from the correct formation position by the time period by which the rise time T_{U} is reduced on the inner periphery of the disk. In this case, the phase of the reproduced signal S_{RF} is advanced by a phase differencen Δθ.

In the second recording apparatus, the modulating magnetic field H_{M} is delayed depending on a particular magneto-optical disk 2 to prevent changes in the pit formation position otherwise caused with the magnetic and temperature characteristics of the magneto-optical disk 2. On the other hand, the light beam LA₁ is controlled as a function of the temperature of the magneto-optical disk 2 and the sweeping position of the light spot to prevent changes in the pit formation position otherwise caused with the above mentioned ambient temperature T_{ENV} and the sweeping position of the light spot.

In the event of a larger control quantity of the irradiation time T_{W} or the irradiation intensity W_{P} of the light beam LA₁, it is necessary to change the delay quantity of the modulating magnetic field as a function of the control quantity.

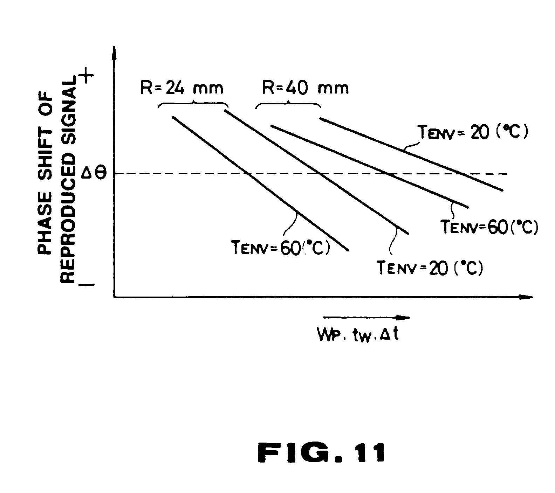

Thus, as shown in Figs. 10 and 11, the irradiation timing of the light beam LA₁, represented by delay time Δ t from the reference clock signal S_{CK}, is retarded on the inner periphery to maintain the correct pit formation positions on the inner and outer peripheries of the disk to prevent phase shift of the reproduced signal.

Similarly, the irradiation time period T_{W} of the light beam LA₁ may be shortened on the inner periphery to prolong the rise time T_{U} to prevent the phase shift of the reproduced signal S_{RF}.

In addition, the irradiation strength W_{P} of the light beam LA₁ may be reduced on the inner periphery to prolong the rise time T_{U} to prevent the phase shift of the reproduced signal S_{RF}.

Thus, in the second recording apparatus, among the irradiation timing, irradiation time T_{W} and the irradiation strength W_{P} of the light beam LA₁, the irradiation time T_{W} and the irradiation strength W_{P} of the light beam LA₁ are controlled to maintain the correct pit formation position.

In the second recording apparatus, the same parts as those of the above-described first apparatus are indicated by the same reference signs as in Fig. 7 and a detailed description thereof is omitted.

With the second magneto-optical recording apparatus 30, a position detection circuit 31 is constituted by a potentiometer having its resistance changed as a function of the position of the recording and/or reproducing head movable radially of the magneto-optical disk 2 (that is, an irradiating optical system for the light beam LA₁ including the semiconductor laser element 8, the collimator lens 9, light polarizing beam splitter 10 and the objective lens 11, a light receiving optical system for receiving the reflected light beam including the condenser lens 12 and the photo detector 13, and the magnetic head 21 as a whole). The sweeping position of the light spot is sensed by the position detection circuit 31 and outputted to a control circuit 32.

A temperature detection circuit 33 detects the temperature in the vicinity of the magneto-optical disk 2 to detect the temperature of the disk 2 and outputs the detected results to the control circuit 32.

The control circuit 32 receives data concerning magnetic and temperature characteristics of the magneto-optical disk 2 and, based on these data, controls the operation of the laser driving circuit 7, the delay circuit 19 and the head driving circuit 20 to prevent changes in the pit formation position otherwise caused by the above mentioned magnetic and temperature characteristics.

It will be noted that the above mentioned control circuit 32 controls not only the head driving circuit 20 but also the delay circuit 19 for the modulating magnetic field to orient the irradiated region of the light beam LA₁ with the intensity higher than that of the necessary magnetic field H_{H}.

It will be noted further that the above mentioned control circuit 32 controls the time period T_{W} of irradiation of the light beam LA₁ and the intensity of irradiation W_{P} of the light beam LA₁, as a function of the results of detection obtained at the position detection circuit 31 and the temperature detection circuit 33 to permit the pit to be formed at the correct position.

Thus, with the second magneto-optical recording apparatus, the pit can be formed at the correct position, even when the ambient temperature T_{ENV} of the magneto-optical disk 2 is changed, so that a markedly broader range of the working temperature of the magneto-optical recording apparatus may be achieved.

Moreover, since the pit can be formed at the correct position even if the sweeping position of the light spot is changed, the recording capacity of the magneto-optical disk 2 may be increased correspondingly.

Meanwhile, by controlling the irradiation time T_{W} and the irradiation intensity W_{P} of the light beam LA₁ in this manner, not only can the pit formation position be kept at the correct position, but the extent of the pit in the transverse direction, that is, in the direction towards the neighboring track, can be kept at a predetermined value.

With the second magneto-optical recording apparatus 30, the irradiation time T_{W} and the irradiation intensity W_{P} of the light beam LA₁ are controlled as a function of the detected temperature of the magneto-optical disk 2 to permit the pit to be formed at the correct position despite changes in the temperature of the magneto-optical disk 2.

Moreover, the sweeping position of the light spot is detected and the irradiation time T_{W} and the irradiation intensity W_{P} of the light beam LA₁ are controlled on the basis of the results of detection to permit the pit to be formed at the correct position despite changes in the sweeping position of the light spot.

In the above-described recording apparatuses, description has been made of the case in which the delay time of the delay circuit 19 and the amplification factor of the head driving circuit 20 are variably controlled on the basis of data of magnetic and temperature characteristics recorded on the control track of the magneto-optical disk. The apparatuses may however be modified by inputting data of the magnetic and temperature characteristics via other input means or by presetting the specific delay time and the amplification factor for the particular magneto-optical disk mounted on the magneto-optical recording apparatus, on the condition that the delay time and the amplification factor are set as a function of the magnetic and temperature characteristics of the magneto-optical disk,

In the above-described recording apparatuses, not only the delay time of the delay circuit 19 but the amplification factor of the head driving circuit 20 are controlled variably. However, solely the delay time may be caused to be variable on the condition that the intensity of the modulating magnetic field is obtained within a practially sufficient range. In such case, it suffices to record only the temperature characteristics of the magneto-optical disk on the control track.

Also, in the above-described apparatuses, description has been made of the case in which time data until the temperature rises to the Curie temperature Tc, peak temperature data and time data until the temperature falls to the Curie temperature, are recorded as the data of the temperature characteristics of the magneto-optical disk 2. However, the temperature characteristics may not be limited thereto and include data of the temperature characteristics such as the rise time or the hold time.

In the second recording apparatus, description has been made of the case of detecting the sweeping position of the light spot with the use of a potentiometer. However, the detection means of the sweeping position is not limited thereto, but the sweeping position of the light spot may also be detected on the basis of the address data of the recording tracks.

In addition, in the second apparatus, description has been made of the case of controlling the irradiation time T_{W} and the irradiation intensity among the irradiation timing, the irradiation time T_{W} and the irradiation intensity W_{P} of the light beam LA₁. However, it is also possible to control the irradiation timing, as well as the irradiation time T_{W} and the irradiation intensity W_{P}, of the light beam LA₁.

## Claims

1. A magneto-optical recording apparatus (30) in which light spots are formed one after another on a magneto-optical disk (2) at the timing of a predetermined reference clock signal (S_{CK}), and a predetermined modulating magnetic field (H_{M}) is applied which is reversed in polarity as a function of record data in synchronism with the reference clock signal (S_{CK}) to magnetically record said record data on the magneto-optical disk,
characterised in that a control circuit (32) is operative to control both the irradiation intensity (W_{P}) and the irradiation time (T_{W}) of a light beam (LA₁) forming said light spots as a function of the temperature of the magneto-optical disk obtained via an output of a temperature sensor means (33) and of the radial sweeping position of said light spot on said magneto-optical disk obtained via an output of a light spot position detection means (31).

2. A magneto-optical recording apparatus according to claim 1, wherein the control circuit (32) is operative to reduce the irradiation intensity (W_{P}) and to shorten the irradiation time (T_{W}) when the apparatus is recording on the inner periphery of a disk.

3. A magneto-optical recording apparatus according to claim 1 or claim 2, wherein the control circuit (32) is also operative to control the irradiation timing (Δt) of the light beam (LA₁) as a function of said temperature and radial sweeping position.

4. A magneto-optical recording apparatus according to claim 1 or claim 3, wherein the control circuit (32) is operative to retard the irradiation timing (Δt) when the apparatus is recording on the inner periphery of a disk.

## Patentansprüche

1. Magnetooptische Aufzeichnungsvorrichtung (30), bei welcher Lichtpunkte nacheinander auf einer magnetooptischen Platte (2) unter der Zeitsteuerung eines vorgegebenen Referenztaktsignals (S_{CK}) ausgebildet werden, und wobei ein vorgegebenes magnetisches Modulationsfeld (H_{M}) angelegt wird, welches in seiner Polarität als eine Funktion der Aufzeichnungsdaten synchron mit dem Referenztaktsignal (S_{CK}) umgepolt wird, um die Aufzeichnungsdaten auf die magnetooptische Platte aufzuzeichnen,
dadurch gekennzeichnet,
daß eine Steuerschaltung (32) betriebsfähig ist, sowohl die Bestrahlungsintensität (W_{P}) als auch die Bestrahlungszeit (T_{W}) eines Lichtstrahls (LA₁), welcher die Lichtpunkte bildet, als eine Funktion der Temperatur der magnetooptischen Platte, welche über ein Ausgangssignal einer Temperaturfühlereinrichtung (33) erhalten wird, und einer radialen Ablenkungsposition des Lichtpunkts auf der magnetooptischen Platte, welche über das Ausgangssignal einer Lichtpunktdetektionseinrichtung (31) erhalten wird, zu steuern.

2. Magnetooptische Aufzeichnungsvorrichtung nach Anspruch 1, bei welcher die Steuerschaltung (32) betriebsbereit ist, die Bestrahlungsintensität (W_{P}) zu verringern und die Bestrahlungszeit (T_{W}) zu kürzen, wenn die Vorrichtung auf der inneren Peripherie einer Platte aufzeichnet.

3. Magnetooptische Aufzeichnungsvorrichtung nach Anspruch 1 oder 2, bei welcher die Steuerschaltung (32) außerdem betriebsbereit ist, die Zeiteinstellung der Bestrahlung (Δt) des Lichtstrahls (LA₁) als eine Funktion der Temperatur und der radialen Ablenkungsposition zu steuern.

4. Magnetooptische Aufzeichnungsvorrichtung nach Anspruch 1 oder 3, bei welcher die Steuerschaltung (32) betriebsbereit ist, die Zeiteinstellung der Bestrahlung (Δt) zu verzögern, wenn die Vorrichtung auf der inneren Peripherie einer Platte aufzeichnet.

## Revendications

1. Appareil d'enregistrement magnéto-optique (30) dans lequel des points lumineux sont formés l'un après l'autre sur un disque magnéto-optique selon le cadencement d'un signal d'horloge de référence prédéterminé (S_{CK}), et un champ magnétique modulant prédéterminé (H_{M}) est appliqué qui est inversé en polarité en fonction des données à enregistrer, en synchronisme avec le signal d'horloge de référence (S_{CK}) pour enregistrer magnétiquement lesdites données à enregistrer sur le disque magnéto-optique,
caractérisé en ce qu'un circuit de commande (32) est opérant pour commander tant l'intensité de rayonnement (W_{P}) que le temps de rayonnement (T_{W}) d'un faisceau de lumière (LA₁) formant lesdits points lumineux en fonction de la température du disque magnéto-optique obtenue par l'intermédiaire de moyens détecteurs de température (33) et de la position radiale de balayage dudit point lumineux sur ledit disque magnéto-optique obtenue par l'intermédiaire d'un signal de sortie desdits moyens de détection de position du point lumineux (31).

2. Appareil d'enregistrement magnéto-optique selon la revendication 1, dans lequel le circuit de commande (32) est opérant pour réduire l'intensité de rayonnement (W_{P}) et pour raccourcir le temps de rayonnement (T_{W}) lorsque l'appareil enregistre sur la périphérie intérieure d'un disque.

3. Appareil d'enregistrement selon la revendication 1 ou la revendication 2, dans lequel le circuit de commande (32) est également opérant pour commander l'instant de rayonnement (Δt) du faisceau de lumière (LA₁) en fonction de ladite température et ladite position radiale de balayage.

4. Appareil d'enregistrement magnéto-optique selon la revendication 1 ou la revendication 3, dans lequel le circuit de commande (32) est opérant pour retarder l'instant de rayonnement (Δt) lorsque l'appareil enregistre sur la périphérie intérieure d'un disque.
